(19) Europäisches Patentamt
European Patent Office
Office européen des brevets

(11) Publication number: **0 396 648 B1**

(12) **EUROPEAN PATENT SPECIFICATION**

(45) Date of publication of patent specification: **13.04.94**

(51) Int. Cl.5: **C02F 3/04**, C02F 3/34, C12N 1/20

(21) Application number: **89909000.5**

(22) Date of filing: **08.08.89**

(86) International application number: **PCT/FI89/00144**

(87) International publication number: **WO 90/01465 (22.02.90 90/05)**

# (54) A PROCESS FOR THE MICROBIOLOGICAL PURIFICATION OF WATER.

(30) Priority: **08.08.88 FI 883685**

(43) Date of publication of application: **14.11.90 Bulletin 90/46**

(45) Publication of the grant of the patent: **13.04.94 Bulletin 94/15**

(84) Designated Contracting States: **AT BE CH DE FR GB IT LI LU NL SE**

(56) References cited:
**EP-A- 0 276 729**
**DE-C- 2 807 529**
**US-A- 2 142 196**

**Chemical Abstracts, vol. 109, (1988), abstract no. 134439c, Water Sci. Technol., 1988, 20(2), 205-8 (Eng)**

**Chemical Abstracts, vol. 105 (1986), abstract no 39171t, Int. J Syst. Bacteriol., 1986, 36 (2), 246-51**

**Chemical Abstracts, vol. 106 (1987), abstract no. 134954e, Appl. Microbiol. Biotechnol., 1986, 25(1), 62-7**

**Chemical Abstracts, vol. 106 (1987), abstract no. 152724j, J Bacteriol., 1987, 169(2), 675-81**

(73) Proprietor: **ALKO LIMITED**
**PB 10350**
**SF-00101 Helsinki(FI)**

(72) Inventor: **VALO, Risto, Juhani**
**Maininkitie 21 A 6**
**SF-02320 Espoo(FI)**
Inventor: **HÄGGBLOM, Max, Mikael**
**Topeliuksenkatu 10 B 36**
**SF-00250 Helsinki(FI)**

(74) Representative: **Davies, Jonathan Mark et al**
**Reddie & Grose**
**16 Theobalds Road**
**London WC1X 8PL (GB)**

EP 0 396 648 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

A process for the microbiological purification of water and a microorganism for use in said process

The invention relates to a process for the purification of polluted water, especially raw or surface water and more specifically also ground water from contaminants which are microbiologically degradable. The invention also relates to a novel microorganism which can be used in said process as well as to said microorganism immobilized on a solid support.

Chemically polluted water is becoming an increasingly serious environmental problem in the industrialized countries. Contaminants which have ended up in the environment in consequence of industrial activity, wastes and damages can be very poisonous even at very low concentrations and in many cases such hazardous contaminants are not naturally degraded at all or degrade only very slowly. Hazardous contaminants are for example chlorinated phenolic compounds, polycyclic aromatic hydrocarbons, oil, various solvents, biocides, etc. The quality of raw water is also impaired by other contaminants which are not easily removed and which in this connection can be regarded as contaminants. Efforts have been made to remove the contaminants e.g. by biodegradation utilizing microorganisms with a specific capacity of degrading specific contaminants.

Particularly chlorinated phenolic compounds and their derivatives, which are referred to by the term "chlorophenols" for short in the following specification and claims are extremely toxic and hazardous contaminants, which are hardly degradable at all in the environment. Several types of fish will be killed even when the concentration of pentachlorophenol (PCP) in the water is 0.6 mg/l or less. Most of the commercially produced chlorophenols are used for wood preservation and the soil and waterways particularly around wood preservation sites have been found to be polluted by chlorophenols. Chlorophenols are also used in many biocides as well as in for instance photographic chemicals. Chlorophenolic pollution has been found both in surface waterways and ground waters at concentrations which are toxic for the environment.

In the biological purification of wastewater the chlorophenols pose a problem not only because of their polluting effect but also by killing the other purifying microorganisms. Etzel et al. in Dev. Ind. Microbiol. (1974) 16:287...295 have reported on the biodegradation of chlorophenols in the purification of wastewater, whereby wastewater containing 20 mg/l of pentachlorophenol (PCP) was passed in a slow continuous flow through the biomass of a microorganism growing in the fiber-wall of a reactor. Most of the pentachlorophenols had degraded after a detention time of 6 hours. A chlorophenol-degrading system for the purification of wastewater has also been disclosed by Portier et al. in Toxicity Assessment: An International Quarterly (1986) Vol 1, p. 501...513. In said system the PCP metabolizing microorganisms were immobilized on a solid support of either chitin, glass-wool or cellulose. The support did not adsorb chlorophenols to any appreciable extent. Wastewater containing 100 mg/l of PCP was passed in a slow continuous flow through the reactor, and the PCP was satisfactorily degraded to a level of about 1 mg/l in 6 to 7 hours.

Valo et al. in Appl. Microbiol. Biotechnol. (1986) 25:68...75 have reported the purification of polluted soil from chlorophenols (about 400...500 mg/kg) by composting utilizing the microorganism Rhodococcus chlorophenolicus PCP-1 DSM 43826 which had been induced to degrade chlorophenols.

In connection with polluted surface and ground waters the vast amount of material to be treated and the relatively low concentration of the toxic material, however, poses another problem compared to polluted wastewater or soil, wherein the amount of the treated material is limited and the amount of contaminants in general is relatively high.

In US Patent 4.713.340 an effort has been made to purify surface water and ground water polluted by chlorophenols utilizing bacteria ATCC 39723 of the genus Flavobacterium, which are capable of degrading chlorophenols. Bacteria induced to degrade PCP were added to basins containing the polluted water, and the bacteria were cultured in said water until the chlorophenol concentration had decreased to an acceptable level. While the patent teaches that the bacteria are capable of removing up to 100 mg/l of PCP from lake water in 40...75 hours, it will easily be realized that the purification of whole lakes and polluted ground water in culture basins is not industrially feasible. Brown et al. Appl. Environ. Microbiol. (1986) Vol. 52 p. 92...97 have suggested the use of the said bacteria, Flavobacterium sp. together with natural bacterial strains fixed on rock for the purification of river waters when the concentration of PCP was as high as 600 mg/l. Also in this case the purification of surface and ground waters poses a problem owing to the quantity of water to be treated.

Moreover, in many cases the temperature of surface water and especially ground water is so low that it does not correspond to the favourable temperature of activity (generally about 20...35 °C) of the microorganisms. Heating large quantities of water to the temperature of activity for the microorganisms consumes energy, besides which the heated water may have additional hazardous effects on the environment.

The object of the present invention is to provide a process, by which large quantities of water can be efficiently purified from biodegradable contaminants.

The object of the invention is also to provide a biofilter containing an immobilized microorganism, which filter is suitable for use in said process.

The object of the invention is further to provide a novel microorganism, which is isolated from the environment and purified and which preferably can be used in said process.

The more detailed objects of the invention will appear from the following specification as well as from the appended claims.

According to the present invention there is provided a process for the microbiological purification of water contaminated with chlorinated phenolic compounds and/or derivatives thereof (chlorophenols), in which process the water to be purified is directed through a biofilter and chlorophenol-degrading microorganisms immobilized onto said biofilter are made to degrade the chlorophenols, **characterized** in that; a) water to be purified is fed through a porous biofilter, capable of reversibly capturing chlorophenols from the aqueous medium and forming an attachment substrate for the chlorophenol-degrading microorganisms, in order to capture the chlorophenols into said biofilter; and b) the flow of the feed water through said biofilter is discontinued and chlorophenol-degrading microorganisms immobilized on said biofilter are made to degrade the captured chlorophenols.

The invention is applied to the removal of chlorophenols from polluted water.

A solid porous biofilter material is used in the process according to the present invention for the purification of water contaminated with chlorinated phenolic compounds and/or derivatives thereof (chlorophenols) whereby said biofilter material comprises a porous polyurethane resin having a large surface area and the capacity of reversibly capturing chlorophenols from an aqueous medium fed through polyurethane resin, said polyurethane resin forming an attachment substrate for a mixed or pure culture or cultures of chlorophenol-degrading micro-organisms immobilized thereon.

The invention is further illustrated by the following specification and the appended drawings, wherein

Fig 1 represents one embodiment of a reactor suitable for use in the process of the invention.

Fig 2 represents an alternative reactor for the carrying out of the process of the invention.

Fig 3 is a graphical representation of the degradation of pentachlorophenol and the evolution of carbon dioxide, respectively, in response to the chlorophenol-degrading action of the microorganism of the invention.

Fig 4 are graphical representations of the total amount of chlorophenol fed into the reactors and the chloride produced in the practice of the process of the invention.

Fig 5 shows an indication of the biodegradation of chlorophenols in the practice of the process of the invention.

Fig 6 shows the amount of chlorophenol discharged from a reactor in a test for purifying chlorophenol-polluted water.

In the process of the invention the contaminant is removed from the water by enriching the contaminant into a biofilter and in this way it is possible to clean very large amounts of water in a short space of time. It is thereby possible to clean also surface water and ground water even from contaminants at relatively low but still harmful levels. The retention time for the water flowing through the biofilter may be very short since in the filtration it is not necessary to provide the time required by the relatively slow biodegradation. Thus the cleaning effect of the apparatus in a given time unit is many times higher than treating the corresponding amount of water in the same space and the same time by a direct biological degradation of the contaminant. The apparatus may be small even though the amount of treated water is large.

The activity and especially the degrading rate of the bacteria capable of degrading the contaminants generally depend on the temperature. One common problem in connection with the purification of surface water and ground water relates to the activity of the bacteria not being at its maximum at the temperature of the feed water, about 4 to about 20 °C. Thus, in case the feed water temperature and/or other circumstances are such that they lower the degrading activity of the bacteria, hardly any biodegradation will take place during the filtration stage.

In connection with the invention it was observed that a process which is especially suitable for purifying large amounts of water from recalcitrant contaminants can be provided by a two-stage method. In the first stage the biodegradable contaminant is continuously removed from a large amount of water flowing through the apparatus by enriching the contaminant into a biofilter. In a second stage microorganisms immobilized on the biofilter are brought to degrade the contaminant captured into the biofilter, in a relatively small amount of water.

In the said second or biodegradation stage a relatively small amount of water surrounding the filter may be circulated, whereby the water may easily be heated to a level which is favourable for the biodegradation between 20 and 35 °C. It is clear that in case the process is used for the purification of warm water or the bacterial activity does not require a warm environment, there is no need for any separate heating.

In case the temperature of the feed water is favourable and the other circumstances are suitable, the immobilized bacteria may have a contaminant-degrading function already during the filtering stage and will degrade the contaminant as it is captured into the biofilter. Water which is cleaned from the contaminant in question will then be continuously discharged from the filter together with the contaminant metabolites. The metabolites formed as a result of the biological activity may either be harmless, water soluble compounds or they may become fixed on the biofilter in the same way as the original contaminant. In the latter case the contaminant-degrading microorganism will preferably degrade also such compounds formed by the biological activity. In case hazardous degradation products are dissolved in the water as a result of the biodegradation it is necessary to ascertain that no degradation takes place during the filtration or the degradation products must be removed in some other way.

The feeding of the water to be purified through the biofilter is discontinued not later than when the biofilter is saturated with the contaminant, which saturation may be detected by the rise in contaminant concentration in the water flowing through the apparatus, i.e. by the fact that the biofilter begins to leak contaminant. In practice it is generally not, however, worth the while to saturate the biofilter with contaminant. Especially in the case of a toxic contaminant the contaminant concentration in the biofilter at the time of disconnection may depend on the tolerance level of the microbes, and the feeding of water should be discontinued well before the contaminant level in the biofilter has risen above the tolerance level of the immobilized microorganism as well as the saturation point of the biofilter.

When a suitable amount of contaminant has been captured in the filter the feeding of water is discontinued and a relatively small amount of water may be circulated in the biofilter. At the same time care should be taken to ensure that the ambient conditions in the biofilter are as favourable as possible for the activity of the contaminant-degrading bacteria. Thus, the temperature, pH, nutrients, are adjusted to a level which is favourable for said activity and efforts are made to retain said level within the range required by the bioactivity of the bacteria in question.

In accordance with the invention the contaminant-capturing biofilter may comprise any porous material which reversibly captures the contaminant to be removed and which is at the same time capable of acting effectively as an attachment substrate for the degrading microorganisms. Such materials which capture chemical compounds generally have a large specific surface area and great porosity. For example porous organic compounds generally function well as biofilters.

As biofilters for chlorophenols, materials such as polyurethane resins as well as wood chips and wood bark may be mentioned, polyurethane being considered most preferable in the process of the invention. The polyurethane resin may be in a form which floats on the water or it may comprise polyurethane which is heavier than water and is specifically modified for the immobilization of bacteria. The modified polyurethane mass is the preferred biofilter since it binds chlorophenols into itself because of its large surface area and its surface charge. Said mass is simultaneously an effective attachment substrate for microbes.

Crushed wood bark and wood chips have been found to absorb chlorophenols (see Apajalahti et al. Microbiol. Ecol. (1984) 10:359 - 367) and said materials are also suitable as biofilters for chlorophenols since they bind chlorophenols reversibly from solutions containing chlorophenols. Said materials function well as attachment substrates for microorganisms.

The microorganisms which are useful in the present process are microorganisms which degrade the contaminant which is to be removed and which microorganisms are capable of being immobilized onto the biofiltering support. Microorganisms which selectively degrade any specific hazardous contaminant are known in the art and a person skilled in the art can choose from among these the most suitable microorganism for any given case.

Examples of such microorganisms include the chlorophenol-degrading microorganisms such as some Arthrobacter and Pseudomonas bacteria which have been disclosed by Portier et at. in Toxicity Assessment: An International Quarterly, Vol 1, p. 501 - 513, (1986), and as pure cultures Flavobacterium sp. (ATCC 39723), which is disclosed in US Patent 4,713,340, as well as Rhodococcus chlorophenolicus PCP-1 (DSM 43826) which is disclosed by Apajalahti et at. in Int. J. Syst. Bacteriol., (1986) 36:246 - 251.

In connection with the present invention we have further isolated and purified a heretofore unknown microorganism, Rhodococcus sp. CP-2 which is deposited in accordance with the Budapest Treaty on May 13, 1988 into the depository DSM (Deutsche Sammlung von Mikroorganismen und Zellkulturen GmbH) and received the number DSM 4598.

The microorganism Rhodococcus chlorophenolicus PCP-1 (DSM 43826) was originally deposited in the DSM and has been continuosly available from said depository during the completion of the present invention. Said microorganism has also been re-deposited in accordance with the Budapest Treaty on January 10, 1989 in DSM and has been designated DSM 5128.

Both above mentioned Rhodococcus bacteria are capable of degrading chlorinated phenolic compounds and their derivatives but they differ slightly in the amounts of degraded chlorophenol. The novel microorganism Rhodococcus CP-2 has a somewhat better capacity for degrading various other chlorophenols than pentachlorophenol.

The microorganism Rhodococcus sp. CP-2 was isolated from chlorophenol contaminated soil. The soil was formed into a slurry in a mineral salts solution, wherefrom a PCP-degrading mixed culture was obtained. The culture was enriched by repeated additions of PCP (5 mg/l). Then one PCP-degrading colony was chosen from a culture growing on an agar plate containing PCP (20 mg/l) and was designated CP-2.

Rhodococcus sp. CP-2 has characteristics of the nocardioform actinomycetes and it was assigned to the genus Rhodococcus. CP-2 grew as orange-yellow mucoid colonies on the plate and in the incubation phase it had a coccoid-rod-coccoid cell morphology. Visible colonies (diameter 1 - 4 mm) appeared after one week of incubation. Growth occured at temperatures of 18 - 37 °C, no growth at >45 °C. The optimum growth temperature was 28 °C. Growth occured in 0.003 and 3.0 % NaCl, but not in 7 % NaCl. Growth on 1 % glucose, fructose, mannitol, maltose (weak), sorbitol, trehalose (weak), inositol, and mannose as the carbon source. The methanolysis of the cells released the following simple fatty acids (the relative abundance is indicated in parenthesis): C10:0 (3), C14:0 (6), C16:0 (23), C16:1cis9 (2), C16:1trans9 (9), C18:0 (1), C18:1trans9 (19) and $10CH_3C18$ (tuberculostearic acid) (12). The cell wall contained mycolic acids having a length of 32 - 26 carbon atoms. The menaquinones contained 9 isoprenoid units and one hydrogenated double bond (type MK-9H2).

CP-2 is capable of using chlorinated phenols as its sole carbon source and it removes 10 µM PCP in five hours to a concentration of 1 µg/l. The strain CP-2 also degrades several other chlorinated phenols such as tetra-, tri- and dichlorinated phenols, guaiacols and syringols and it does not lose its oapacity of degrading chlorophenols when being transferred to a substrate lacking chlorophenols. The strain Rhodococcus sp. CP-2 as well as the previously isolated Rhodococcus chlorophenolicus PCP-1 (DSM 43826) are especially suitable bacteria for the purification of water in accordance with the process of the invention since they are capable of cleaning the water almost completely from the chlorophenols being released from the biofilter (see e.g. Fig. 3). It is evident that also chlorophenol-degrading strains derived from said bacteria as well as other microbial strains having the corresponding degrading capacity can be used in the present process.

The aerobic degradation of pentachlorophenol to carbon dioxide and inorganic chloride by the action of bacteria of the genus Rhodococcus is shown in the following reaction scheme:

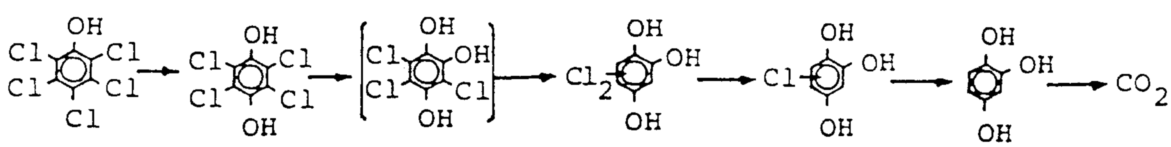

It should be noted that the first degradation products of the chlorophenols are chlorohydroquinones. Such compounds are used for example as photographic chemicals and they may thus be removed from the wastewaters of the photographic industry in accordance with the process of the invention.

In the process according to the invention the contaminant-degrading microorganisms are used in an immobilized form attached to a solid support. The degrading bacteria are preferably allowed to incubate in a nutrient medium together with a mass comprising the solid support material, whereby the bacteria become attached to the support. The attachment may be based e.g. on adsorption or covalent binding. When it is a question of immobilizing chlorophenol-degrading Rhodococcus strains onto a support such as a polyurethane resin or wood bark, the microorganisms are attached by a mucous growth being formed as the microbes grow using sugar as the carbon source.

The chlorophenol-degrading capacity of the bacteria Rhodococcus CP-2 and Rhodococcus chlorophenolicus PCP-1 is genetically stable but requires an induction. The contaminant-degrading capacity of the bacteria can be induced either prior to the immobilization or after the immobilization. In connection with the induction the bacteria are fed with the chemical to be degraded as well as with the nutrient medium so that the bacteria will produce the enzymes which degrade the specific contaminant.

In actual practice the biomass can be immobilized onto the support by circulating a pure culture strain incubated in a fermentor through the support mass until a sufficient amount of biomass has become attached to the support.

The support comprising the immobilized chlorophenol-degrading microorganism of the genus Rhodococcus is a novel product developed in connection with the present invention. Preferred supports in the embodiments of the invention comprise organic porous materials such as wood bark, wood chips and modified polyurethane resins. The microorganisms of the genus Rhodococcus which are immobilized on a support retain their activity for a long time. This is a great advantage in their commercial use.

Since hydrochloric acid is formed as a product of the biodegradation of chlorophenols the reactor circulating liquid should be buffered during the degradation stage. On the other hand no nutrients need be added to the reactor since the microorganisms in the reactor are capable of using the carbon deriving from the chlorophenol as their sole carbon source.

The biomass of the reactor may need to be activated or regenerated after each or several biodegradation stages by circulating nutrient-containing water in the reactor. The reactor is preferably fed with a sugar source favouring the growth of the microorganism in question. The bacteria are preferably fed with a carbon source which has a maximum favourable effect on the desired bacterial strain but which the minimum amount of other bacteria are capable of using. That way the desired microbes increase in number and some detached biomass is detected in the water discharged from the reactor. During the degradation and filtering stage, however, essentially no biomass will be detached from the support.

After the regeneration or in connection with the regeneration it may be necessary or at least advantageous to re-induce the contaminant-degrading mechanism into the microorganism. This is done by conducting a small amount of the contaminant, e.g. chlorophenol into the reactor so that the biosynthesis of the degrading enzyme is actuated.

The reactor can be cleaned at need for example by washing with pressurized water using the circulating pump or in the case of the reactor being clogged the cleaning may be performed through suitable manholes or charging holes in the reactor.

The present process is preferably implemented in a reactor system having at least two reactors one of said reactors functioning in the filtering stage of the process while the other one undergoes the biodegradation process. It may be advantageous to implement the present process in a system having several reactors connected in parallel or in series so that any one reactor may undergo the biodegradation process while the other reactors function as biofilters.

In case the system comprises more than two reactors the treatment stages of the reactors are periodically circulated so that the reactor which at a given time has been capturing contaminant for the longest time will be next connected to the degradation stage and the reactor which in the previous cycle underwent a degradation stage, and an eventual activation stage, is connected as the last one of a series of filtering reactors.

Figure 1 illustrates a reactor suitable for the purification of chlorophenol-containing water. The bioreactor includes several departments 1 on top of each other, said departments being filled with a mass functioning as an attachment surface for the microbes. The microbes on the surface of said mass are capable of degrading chlorophenols. Said mass is charged into the reactor through the charging openings 2. Said mass is placed on perforated trays 4 which support the filling mass and separate the reactor space into separate departments. Air is fed into the reactor through aerator unit 5 in case the degrading activity of the microbes is an aerobic process and requires aeration. Water to be cleaned is fed through pipe 10 by feed and circulating pump 7 through feed and circulation pipe 8 to the revolving sprinkler 6 which meters the contaminated water uniformly into the reactor.

At the top of the reactor there is an exhaust pipe 12 for any gas formed in the biodegradation and for the discharge of the aerating gas, and in the lower part of the reactor there is a discharge pipe 11 for cleaned water. Each department comprises sample taps 9 and the reactor further comprises a monitoring pipe indicated by the number 3 for detecting the liquid level. The circulation pipe 8 of the reactor further comprises thermal resistances (not shown) which can be used for heating the circulating water to the desired level required by the biodegrading activity of the microbes. Pipe 8 may further comprise a feed pipe which can be closed by a valve and which may be used for any feed of buffer and/or nutrient solution, which nutrient solution specifically in the regeneration phase of the reactor is fed to the circulating water.

In the reactor system there may be several such reactors connected in series or parallel so that the water fed by the pump (or pumps) can be directed to and from any reactor or away from the system by turning suitable valves. In such a system any reactor(s) may be shut off from the line of the feed water, whereby water may be circulated in such reactor(s) respectively through the circulation pipe.

The process according to the invention may be carried out also in a reactor according to Figure 2, wherein the support 1 comprises chlorophenol-degrading microbes attached to the surface thereof. The feed water is passed into the reactor through the inlet pipe 4 in the lower part of the reactor with the aid of feed and circulating pump 3. Having flowed through the biofilter 1 the cleaned water passes to a settling space 2 at the top of the reactor and the water is further conducted away through discharge pipe 5.

For the aerobic activity of the microbes the reactor is aerated through the perforated aerating pipe 6 in the lower part of the reactor, and the reactor gases are discharged through pipe 7.

The following examples further illustrate the invention without, however, limiting it in any way.

Example 1

Isolation of a contaminant-degrading microorganism

10 to 15 g samples of contaminated soil or slurry were inoculated into 500 ml columns containing softwood bark chips as a solid support and 200 ml of mineral salts solution was percolated through said columns. Tetrachloroguaiacol (TeCG) was added weekly to a concentration of 10 to 50 $\mu$M. After three months it was observed that the percolating fluids contained mixed cultures which repeatedly removed added TeCG (10 $\mu$M). The cultures obtained from the percolators where enriched by repeated dilutions and by feeding with 10 to 20 $\mu$M TeCG at 2 to 3 days' intervals. Samples from the cultures were streaked onto DSM-65 (glucose 4.0 g, yeast extract 4.0 g, malt extract 4.0 g, $H_2O$ 1000 ml, pH 7.2) agar containing 10 $\mu$M TeCG, and 130 colonies from each mixed culture were tested for TeCG-degradation by measuring the removal of TeCG from the solution. The TeCG-degrading colonies were purified.

By a corresponding method using pentachlorophenol as for enrichment substrate Rhodococcus CP-2 (DSM 4598) among others was obtained. Said microorganism completely removed 10 $\mu$M pentachlorophenol (PCP) in five hours and 70 % of the $^{14}C$-labeled PCP evolved as $^{14}CO_2$ (see Fig. 3). Fig. 3 shows the degradation of 10 $\mu$M PCP spiked with $^{14}C$ PCP as a function of time. The figure ○ in the curve designates the PCP concentration and the figure □ designates the evolution of $^{14}CO_2$.

The strain CP-2 also degraded other chlorinated phenols, guaiacols and syringols in 10 uM solutions. In these tests pentachlorophenol (PCP), 2,3,4,5-tetrachlorophenol (2345-TeCP), 2,3,4,6-tetrachlorophenol (2346-TeCP), 2,3,5,6-tetrachlorophenol (2356-TeCP), 2,3,4-trichlorophenol (234-TCP), 2,3,5-trichlorophenol (235-TCP), 2,3,6-trichlorophenol (236-TCP), 3,4,5-trichlorophenol (245-TCP), 2,5-dichlorophenol (25-DCP), tetrachloroguaiacol (or tetrachloro-2-methoxyphenol) (TeCG), 2,4,5-trichloroguaiacol (345-TCG), 3,4,6-trichloroguaiacol (346-TCG), 3,5,6-trichloroguaiacol (356-TCG), 4,5,6-trichloroguaiacol (456-TCG), 3,4-dichloroguaiacol (34-DCG), 3,5-dichloroguaiacol (35-DCG), 3,6-dichloroguaiacol (36-DCG), trichlorosyringol (or trichloro-2,6-dimethoxyphenol) (TCS) and 3,5-dichlorosyringol (35-DCS) degraded in 48 hours.

By a corresponding method also bacteria degrading other contaminants and other chlorophenol-degrading bacteria can be isolated, which bacteria can be used in the process of the present invention.

Example 2

Immobilization of the microorganism onto a support

Pure cultures of the chlorophenol-degrading microorganisms Rhodococcus chlorophenolicus PCP-1 (DSM 43826) and Rhodococcus CP-2 DSM (4598) were immobilized on a polyurethane resin mass which comprised polyurethane resin REA 90/16 produced by Bayer Ag, West-Germany, which polyurethane was modified for the immobilization of bacteria (particle size below 10 mm; density from 1.14 to 1.05 kg/l at 20 °C; weigth in suspension 115 kg as kg dry substances/$m^3$ volume of suspension; rate of sedimentation: 94 ± 6 m/h).

The mixed culture of the bacteria was incubated in a fermentor using 1 % glucose, 1 % sorbitol as carbon source in the presence of the support. As they grew the bacteria excreted slime and attached perceptively onto the surface of the support material. When sufficient biomass had formed the incubation was ended.

The polyurethane mass containing the immobilized Rhodococcus culture was stored for 20 days at +4 °C. In a test performed after said storage the microbes were found to be still capable of degrading chlorophenols.

Chlorophenol-degrading Rhodococcus bacteria have been found to degrade chlorophenols even after having been stored at +4 °C for one year.

Example 3

Bioreactor function

The tests were performed in a 0.5 l laboratory size test reactor having a water feed opening and a gas exhaust opening at the top, a water discharged opening in the bottom, and an aeration opening in the lower part thereof. Modified polyurethane REA 90/16 (producer Bayer AG, West-Germany) was used as support material. The amount of mass in the reactor was 400 ml.

Rhodococcus chlorophenolicus (DSM 43826) bacteria and Rhodococcus CP-2 (DSM 4598) were used as degrading microbes. The microbes were immobilized on the polyurethane resin support by incubating them in a suitable growth medium together with said resin.

The test reactor was filled with active resin including both types of microorganisms in an immobilized form. An identical reference reactor (sterile) was without microbes. The purpose of the sterile parallel test was to check the binding of chlorophenols onto the surface of the mass and to eliminate the share of any non-biological mechanism in the degradation.

The feed comprised chlorophenol-containing water having a chlorophenol content of either 0.1, 5, 10 or 20 mg/l. The feed rate was 2 vol/d. The temperature was +25 °C, the aeration rate 5 ml/min. A slight buffering was performed with a phosphate buffer for keeping the pH at about 7.

In connection with the test chlorophenol degradation was observed:

1) by the increase of inorganic chloride in the water discharged from the biofilter. The chloride derived from chlorine bound to the chlorophenol molecule;

2) by adding $^{14}C$-labeled pentachlorophenol into the reactor it was indicated that $^{14}C$ carbon dioxide deriving from the labeled PCP-ring was discharged with the exhaust gas;

3) by measuring the total chlorophenol content of the discharged water and the fed water by gas chromatography;

4) by comparing the analysis results from the active biofilter and the sterile biofilter it was noted that only the active column degraded chlorophenols.

Chlorophenols (in the form of a wood preservative called Ky-5, producer Kymi Oy, Kuusankoski, Finland) were fed into the reactors in accordance with the values in Table 1 during 63 days. The chlorophenol content was measured in the feed solution by gas chromatography.

TABLE 1

| The chlorophenol (Ky-5) content in the solution fed into the biofilters during the test | |
|---|---|
| Times (days) | Chlorophenol content (mg/l) |
| 0...11 | 3.4 |
| 11...20 | 6.2 |
| 20...29 | 12.8 |
| 29...40 | 20.3 |
| 40...50 | 0 |
| 50...53 | 25.3 |
| 53...58 | 0 |
| 58...62 | 25.3 |
| 62... | 0 |

The average chlorophenol content of the preservative Ky-5 is disclosed in percentages by weight in the following Table 2.

TABLE 2

| Chlorophenol | Percentage |
|---|---|
| 2,6-DCP | < 0.01 |
| 2,4-DCP | 1 |
| 2,4,6-TCP | 11 |
| 2,4,5-TCP | 0.06 |
| 2,3,4-TCP | 0.04 |
| 2,3,4,6-TeCP | 80 |
| PCP | 7.5 |

The nutrient concentration (N, P, etc.) was very low in the liquid fed during the test so that the cells would not increase in number and the reactor leak microbes.

At the 7th day $^{14}C$-labeled pentachlorophenol, having its ring carbon atoms randomly labeled, was fed into the reactors in order to indicate the mineralization of pentachlorophenol by $^{14}C$-labeled carbon dioxide.

During the whole test the sterile biofilter remained free of microbial growth. It did not discharge radio active carbon dioxide or inorganic chloride.

The test results are shown in Figs. 4 to 6.

Fig. 4 shows the degradation in the biofilter of chlorophenol to inorganic chloride. The upper curve shows the sum of chlorophenol (CP) fed into the reactors during the test and the lower curve shows the produced chloride ($Cl^-$). The chloride forms about 60 % of the weight of the chlorophenol. A calculation on this basis indicates that the immobilized cells have degraded about 55 % of the added chlorophenol during the 63 days. The rest of the chlorophenol is bound to the polyurethane support.

Fig. 5 shows an indication of the biodegradation of pentachlorophenol by the action of the immobilized bacteria. The radio active pentachlorophenol (the ring carbons randomly labeled by $^{14}C$) (55500 cpm) added at the 7th day of the test decomposed into labeled carbon dioxide. The yield was nearly 50 %. A part of the labeled PCP remained out of range for the bacteria as it was bound to the polyurethane mass and a small amount was possibly transformed to cell mass. No radio activity was found to leak through the degrading reactor.

Fig. 6 shows the amount of chlorophenol discharged from each of the reactors. The sterile as well as the bacteria-containing biofilter both effectively bind chlorophenols during 25 days. Thereafter the reactor wherein no degradation takes place begins to leak chlorophenols very quickly. The degrading biofilter, on the other hand, let through only very little chlorophenol, the content in the discharged water generally remaining below 10 µg/l, which is the accepted limit for the chlorophenol content in household water. In the water discharged from the sterile filter the content rose up to a level of 1 mg/l at the end of the 60 day test run, which is a result of the polyurethane mass being saturated with chlorophenols.

Example 4

Test performed with cold feed water

The same test apparatus as the one in Example 3 was used in the test. Chlorophenol-containing cold (+5 °C) water was fed through the reactor during three days and a slight decrease in the chlorophenol binding capacity was noted.

Thereafter the reactor was brought to room temperature (+25 °C) and it immediately started to degrade chlorophenol. The amount of chloride in the circulated fluid increased heavily as an indication of chlorophenol degradation.

During a continuous test (the test continued for 98 days) the purification of cold water was several times tested in the above described reactor. In these tests the reactor was fed during 2 or 1 days water including chlorophenols in the amount indicated in Table 3. Then the feeding of the water was discontinued and water was circulated at +25 °C in the reactor for 5 and 16 days, respectively. The parameters of the test and the test results are indicated in Table 3.

The amounts of chlorides in the liquid discharged from the test reactor and the reference reactor during the cold treatment were identical, but immediately when the reactors were heated the chloride content in the liquid discharged from the test reactor was higher than that from the reference reactor, i.e. the microbe activity starts immediately when the temperature rises to one favouring said microbial activity.

TABLE 3

Absorption of chlorophenols in cold with subsequent degradation at +25 °C

| Test day | Cold absorption (day) / degradation stage (day) cold/degrad. | Chlorophenol fed cold (mg) | Chlorophenol discharged in absorption stage (µg/l) test reactor | Chlorophenol discharged in absorption stage (µg/l) comp. reactor | Chloride released in degradation (mg) | percentage of added |
|---|---|---|---|---|---|---|
| 99 | 2/5 | 49 | 84 | 3335 | 6 | 21 |
| 105 | 2/5 | 81 | 94 | 4081 | 10 | 20 |
| 110 | 1/5 | 100 | 28 | 3104 | 9 | 15 |
| 117 | 2/16 | 284 | 31 | 1203 | 53 | 31 |

## Claims

1. A process for the microbiological purification of water contaminated with chlorinated phenolic compounds and/or derivatives thereof (chlorophenols), in which process the water to be purified is directed through a biofilter and chlorophenol-degrading microorganisms immobilized onto said biofilter are made

to degrade the chlorophenols, **characterized** in that; a) water to be purified is fed through a porous biofilter, capable of reversibly capturing chlorophenols from the aqueous medium and forming an attachment substrate for the chlorophenol-degrading microorganisms, in order to capture the chlorophenols into said biofilter; and b) the flow of the feed water through said biofilter is discontinued and chlorophenol-degrading microorganisms immobilized on said biofilter are made to degrade the captured chlorophenols.

**2.** A process according to claim 1, wherein a relatively small amount of water surrounding the biofilter in stage b) is circulated in said biofilter during said stage.

**3.** A process according to claims 1 or 2, wherein parameters of the water surrounding the biofilter during stage b) are adjusted in order to obtain and/or retain an environment which is favourable for the activity of the degrading microorganisms.

**4.** A process according to claim 3, wherein the parameters to be adjusted are chosen from temperature, pH-value, and nutrients.

**5.** A process according to any preceding claim wherein the water to be purified, is colder than the temperature of activity of the degrading microorganisms, and the temperature during the filtering stage is kept at the temperature of the feed water, and the temperature of the water surrounding the biofilter is raised at the beginning of stage b) to a level which is favourable to the activity of the degrading microorganisms between 20 and 35 °C, and that said water is retained at said temperature until the captured chlorophenols have essentially decomposed.

**6.** A process according to claim 5, wherein the water to be purified is surface water or ground water.

**7.** A process according to any preceding claim wherein the degrading microorganisms comprise bacteria of the genus Rhodococous which degrade chlorinated phenolic compounds and their derivatives.

**8.** A process according to claim 7, wherein the bacteria are Rhodococcus sp. CP-2 (DSM 4598) and/or Rhodococcus chlorophenolicus PCP-1 (DSM 43826).

**9.** A process according to any preceding claim wherein the biofilter comprises a porous material which reversibly captures chlorophenols and onto which chlorophenol-degrading microorganisms are immobilized.

**10.** A process according to claim 9, wherein the porous material is chosen from a polyurethane resin, wood bark or wood chips.

**11.** A process according to claim 9, wherein the biofilter comprises a polyurethane resin which is modified for the immobilization of microbes and to which chlorophenol-degrading Rhodococcus bacterial cultures are immobilized.

**12.** A process according to any preceding claim wherein when the biofilter has gone through stage b) it is transferred back to stage a) by directing thereto water to be purified, and that this chain of activity composed of said stages a) and b), is repeated.

**13.** A process according to any preceding claim wherein the biofilter comprises at least two biofilters connected in series or parallel so that while one biofilter is functioning in stage b) the other biofilters filter chlorophenols from the feed water.

**14.** A process according to claim 13, wherein feed water is directed through two or several biofilters connected in series and that the biofilter which was first in the flow sequence is transferred to the stage b) and the biofilter which was functioning in stage b) is connected as the last filter in the feed water flow sequence.

**15.** A process according to any preceding claim wherein the microorganisms immobilized con the biofilter are regenerated at intervals after stage b) by circulating nutrient-rich water through said biofilter so that

the microorganisms increase in number.

## Patentansprüche

1. Verfahren zur mikrobiologischen Reinigung von mit chlorierten Phenolverbindungen und/oder Derivaten davon (Chlorphenole) verunreinigtem Wasser, wobei in dem Verfahren das zu reinigende Wasser durch ein Biofilter geleitet wird und Chlorphenol abbauende Mikroorganismen, die auf dem Biofilter immobilisiert sind, zum Abbau der Chlorphenole veranlaßt werden, dadurch gekennzeichnet, daß
   a) das zu reinigende Wasser durch ein poröses Biofilter geleitet wird, das Chlorphenole aus dem wäßrigen Medium reversibel festhalten kann und ein Anlagerungssubstrat für die Chlorphenol abbauenden Mikroorganismen bilden kann, so daß die Chlorphenole im Biofilter festgehalten werden, und
   b) das Durchlaufen des eingespeisten Wassers durch das Biofilter unterbrochen wird und die auf dem Biofilter immobilisierten Chlorphenol abbauenden Mikroorganismen zum Abbau der festgehaltenen Chlorphenole veranlaßt werden.

2. Verfahren nach Anspruch 1, wobei eine relativ kleine Menge Wasser, die den Biofilter in Schritt b) umgibt, während dieses Schrittes im Biofilter zirkuliert.

3. Verfahren nach Anspruch 1 oder 2, wobei die Parameter des den Biofilter in Schritt b) umgebenden Wassers so angepaßt werden, daß man eine Umgebung erhält und/oder aufrechterhält, die für die Wirksamkeit der abbauenden Mikroorganismen günstig ist.

4. Verfahren nach Anspruch 3, wobei die anzupassenden Parameter ausgewählt sind aus Temperatur, pH-Wert und Nährstoffen.

5. Verfahren nach einem der vorangehenden Ansprüche, wobei das zu reinigende Wasser kälter ist als die Temperatur, bei der die abbauenden Mikroorganismen wirksam sind, und die Temperatur während des Filtrationsschrittes auf der Höhe der Temperatur des eingespeisten Wassers gehalten wird und die Temperatur des den Biofilter umgebenden Wassers am Beginn von Schritt b) auf einen Wert zwischen 20 und 35 °C gebracht wird, der für die Wirksamkeit der abbauenden Mikroorganismen günstig ist, und daß das Wasser bei dieser Temperatur gehalten wird, bis die festgehaltenen Chlorphenole im wesentlichen zersetzt sind.

6. Verfahren nach Anspruch 5, wobei das zu reinigende Wasser Oberflächenwasser oder Grundwasser ist.

7. Verfahren nach einem der vorangehenden Ansprüche, wobei die abbauenden Mikroorganismen Bakterien der Gattung Rhodococcus umfassen, die chlorierte Phenolverbindungen und deren Derivate abbauen.

8. Verfahren nach Anspruch 7, wobei die Bakterien Rhodococcus sp. CP-2 (DS 4598) und/oder Rhodococcus chlorophenolicus PCP-1 (DSM 43826) sind.

9. Verfahren nach einem der vorangehenden Ansprüche, wobei das Biofilter ein poröses Material umfaßt, das reversibel Chlorphenole festhält und auf dem Chlorphenol abbauende Mikroorganismen immobilisiert sind.

10. Verfahren nach Anspruch 9, wobei das poröse Material ausgewählt ist aus Polyurethanharz, Holzrinde oder Holzspänen.

11. Verfahren nach Anspruch 9, wobei das Biofilter ein Polyurethanharz umfaßt, das für die Immobilisierung von Mikroben modifiziert wurde und auf dem Chlorphenol abbauende bakterielle Kulturen von Rhodocuccus immobilisiert sind.

12. Verfahren nach einem der vorangehenden Ansprüche, wobei das Biofilter nach Durchführung des Schrittes b) wieder in Schritt a) eingesetzt wird, indem zu reinigendes Wasser hindurchgeleitet wird, und daß diese Wirkungskette aus den Schritten a) und b) wiederholt wird.

13. Verfahren nach einem der vorangehenden Ansprüche, wobei das Biofilter mindestens zwei Biofilter umfaßt, die in Reihe oder parallel geschaltet sind, so daß, wenn das eine Biofilter in Schritt b) eingesetzt wird, das andere Biofilter Chlorphenole aus dem eingespeisten Wasser filtriert.

14. Verfahren nach Anspruch 13, wobei das eingespeiste Wasser durch zwei oder mehrere Biofilter geleitet wird, die in Reihe geschaltet sind, und daß das Biofilter, das das erste in der Durchflußsequenz war, in Schritt b) eingesetzt wird, und das Biofilter, das in Schritt b) eingesetzt wurde, als das letzte Filter in der Durchflußsequenz des eingespeisten Wassers geschaltet ist.

15. Verfahren nach einem der vorangehenden Ansprüche, wobei die auf dem Biofilter immobilisierten Mikroorganismen in Abständen nach Schritt b) regeneriert werden, indem nährstoffreiches Wasser durch das Biofilter zirkuliert, so daß die Mikroorganismen in ihrer Zahl ansteigen.

**Revendications**

1. Procédé d'épuration microbiologique de l'eau contaminée de composés phénoliques chlorés et/ou leurs dérivés (chlorophénols), procédé dans lequel l'eau à épurer est dirigée à travers un biofiltre et des micro-organismes dégradant le chlorophénol immobilisés sur ledit biofiltre, sont forcés à dégrader les chlorophénols, caractérisé en ce que
   a) l'eau à épurer est fournie à travers un biofiltre poreux capable de capturer de manière réversible les chlorophénols du milieu aqueux et de former un substrat de fixation des micro-organismes dégradant les chlorophénols afin de capturer les chlorophénols dans ledit biofiltre; et
   b) l'écoulement de l'eau d'alimentation à travers ledit biofiltre est arrêté et les micro-organismes dégradant les chlorophénols immobilisés sur ledit biofiltre sont forcés à dégrader les chlorophénols capturés.

2. Procédé selon la revendication 1, où une relativement petite quantité de l'eau entourant le biofiltre au stade b) est mise en circulation dans ledit biofiltre pendant ledit stade.

3. Procédé selon les revendications 1 ou 2, où les paramètres de l'eau entourant le biofiltre pendant le stade b) sont ajustés afin d'obtenir et/ou de conserver un environnement qui est favorable à l'activité des micro-organismes dégradants.

4. Procédé selon la revendication 3, où les paramètres à ajuster sont choisis parmi la température, la valeur du pH et les aliments.

5. Procédé selon l'une quelconque des revendications précédentes, où l'eau à épurer est plus froide que la température d'activité des micro-organismes dégradants et la température pendant le stade de filtration est maintenue à la température de l'eau d'alimentation et la température de l'eau entourant le biofiltre est élevée au début du stade b) à un niveau qui est favorable à l'activité des micro-organismes dégradants, entre 20 et 35 °C, et en ce que ladite eau est maintenue à ladite température jusqu'à ce que les chlorophénols capturés se soient essentiellement décomposés.

6. Procédé selon la revendication 5, où l'eau à épurer est de l'eau de surface ou de l'eau souterraine.

7. Procédé selon l'une quelconque des revendications précédentes où les micro-organismes dégradants comprennent des bactéries du genre Rhodococcus qui dégradent les composés phénoliques chlorés ainsi que leurs dérivés.

8. Procédé selon la revendication 7, où les bactéries sont Rhodococcus sp. CP-2 (DSM 4598) et/ou Rhodococcus chlorophenolicus PCP-1 (DSM 43826).

9. Procédé selon l'une quelconque des revendications précédentes, où le biofiltre comprend une matière poreuse qui capture de façon réversible les chlorophénols et où sont immobilisés des micro-organismes dégradant les chlorophénols.

10. Procédé selon la revendication 9, où la matière poreuse est choisie parmi une résine de polyuréthane, de l'écorce de bois ou des copeaux de bois.

**11.** Procédé selon la revendication 9, où le biofiltre comprend une résine de polyuréthane qui est modifiée pour l'immobilisation de microbes et où sont immobilisées des cultures bactériennes de Rhodococcus dégradant les chlorophénols.

**12.** Procédé selon l'une quelconque des revendications précédentes où, quand le biofiltre est passé par le stade b) il est retransféré au stade a) en y dirigeant de l'eau à épurer, et en ce que cette chaîne d'activité, composée desdits stades a) et b), est répétée.

**13.** Procédé selon l'une quelconque des revendications précédentes où le biofiltre comprend au moins deux biofiltres qui sont connectés en série ou en parallèle de façon que tandis qu'un biofiltre fonctionne au stade b), les autres biofiltres filtrent les chlorophénols de l'eau d'alimentation.

**14.** Procédé selon la revendication 13, où l'eau d'alimentation est dirigée à travers deux biofiltres ou plus qui sont connectés en série et le biofiltre qui était le premier dans la séquence d'écoulement est transféré au stade b) et le biofiltre qui fonctionnait au stade b) est connecté en tant que dernier filtre dans la séquence d'écoulement d'eau d'alimentation.

**15.** Procédé selon l'une quelconque des revendications précédentes où les micro-organismes immobilisés sur le biofiltre sont régénérés à des intervalles après le stade b) par circulation d'eau riche en aliments, à travers ledit biofiltre, de manière que le nombre de micro-organismes augmente.

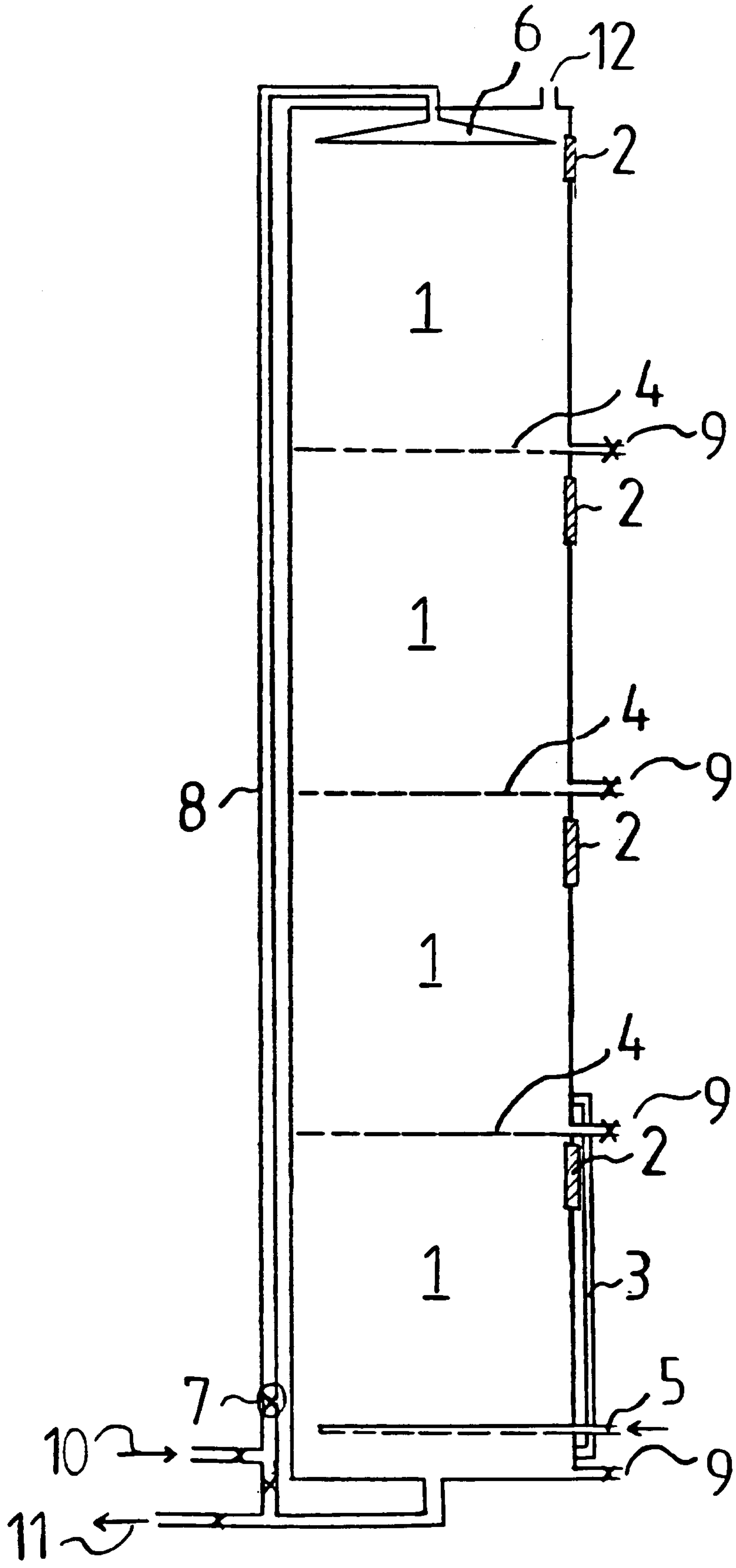


FIG. 1

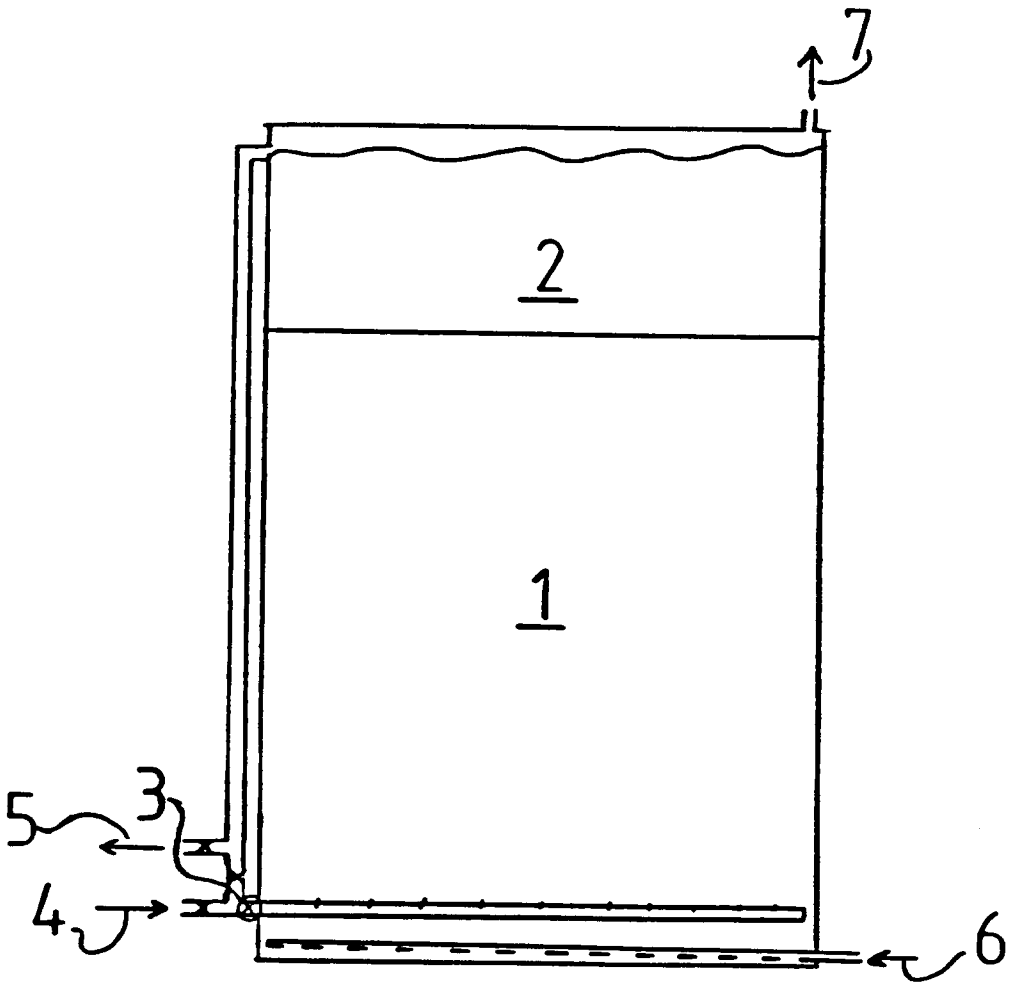


FIG. 2

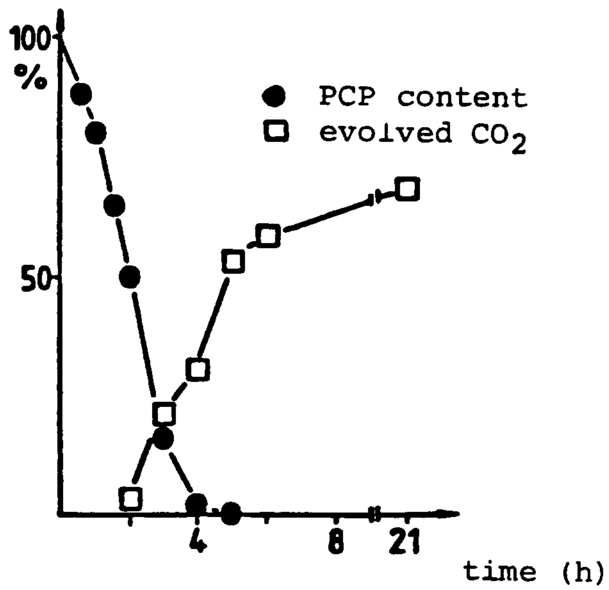
100
%
50
PCP content
evolved $CO_2$
4
8
21
time (h)

FIG. 3

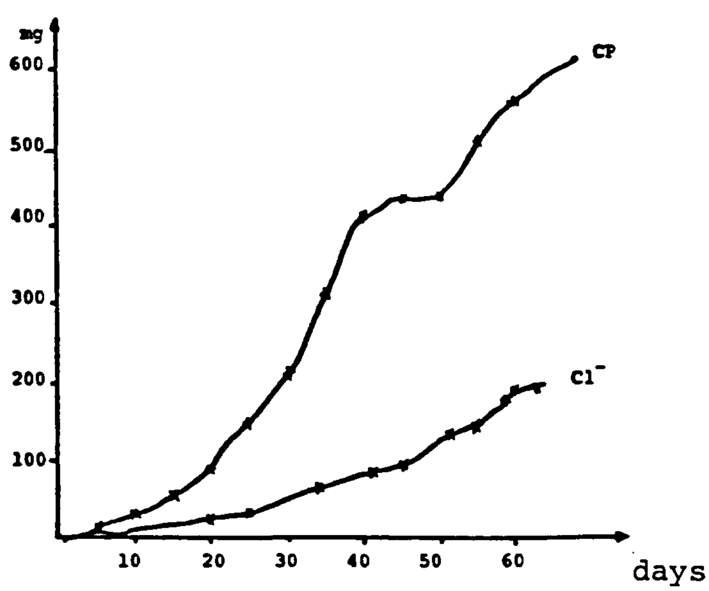
mg
600
500
400
300
200
100
CP
Cl⁻
10
20
30
40
50
60
days

FIG. 4

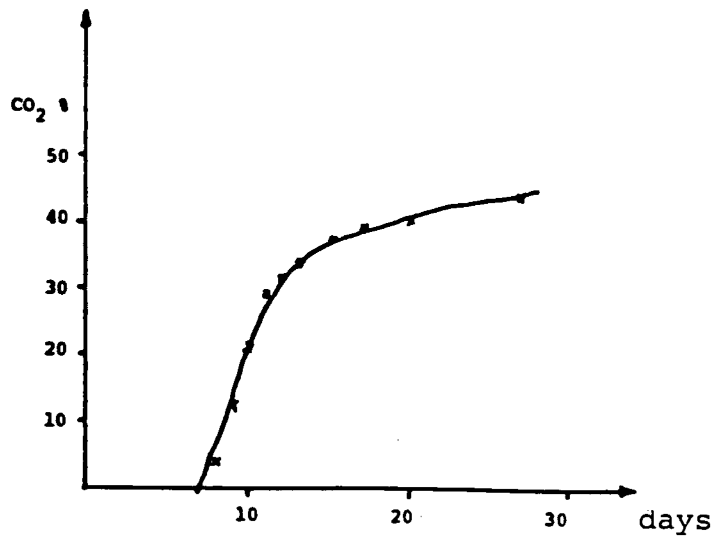
CO2 %
50
40
30
20
10
10
20
30
days

FIG. 5

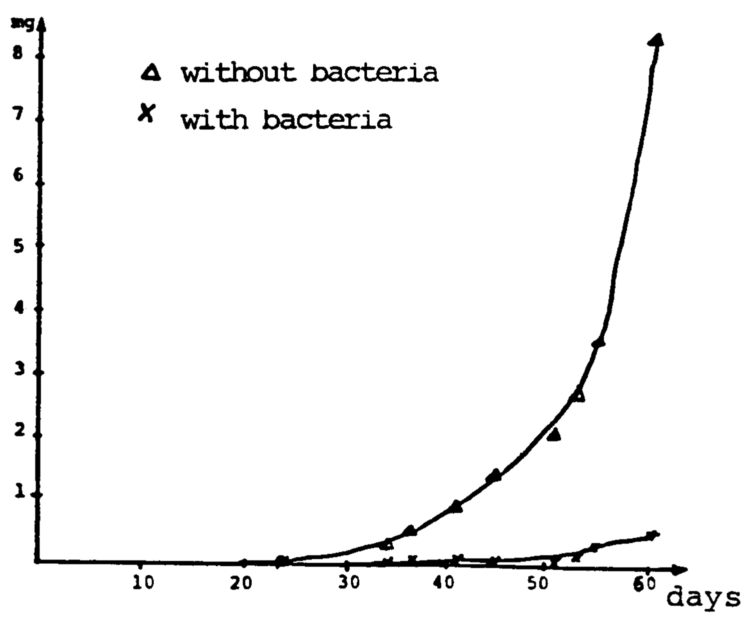
mg
8
7
6
5
4
3
2
1
without bacteria
with bacteria
10
20
30
40
50
60
days

FIG. 6